# EUROPÄISCHE PATENTSCHRIFT

(11) **EP 2 788 571 B1**
(45) Veröffentlichungstag und Bekanntmachung des Hinweises auf die Patenterteilung: **09.12.2015**
(21) Anmeldenummer: 13750491.6
(22) Anmeldetag: 28.06.2013
(51) Int. Cl.: E06B 3/673

(54) **VERFAHREN UND VORRICHTUNG ZUM VERSIEGELN VON ISOLIERGLASROHLINGEN**
METHOD AND DEVICE FOR SEALING INSULATING GLASS BLANKS
PROCÉDÉ ET DISPOSITIF POUR LE SCELLEMENT DES ÉBAUCHES DE VITRAGE ISOLANT

(30) Priorität: 29.06.2012 AT 7312012
(43) Veröffentlichungstag der Anmeldung: 15.10.2014
(73) Patentinhaber: LISEC Austria GmbH, 3353 Seitenstetten (AT)
(72) Erfinder: LININGER, Markus, A-3364 Neuhofen/Ybbs (AT); KRONSTEINER, Alexander, A-3372 Blindenmarkt (AT); EDER, Mario, A-3371 Neumarkt (AT)
(74) Vertreter: Beer & Partner Patentanwälte KG
(86) Internationale Anmeldenummer: PCT/AT2013/000109
(87) Internationale Veröffentlichungsnummer: WO 2014/000002

(56) Entgegenhaltungen:
- FR-A1- 2 560 813

## Beschreibung

Die Erfindung betrifft ein Verfahren und eine Vorrichtung mit den Merkmalen der Oberbegriffe der unabhängigen, auf das Verfahren und die Vorrichtung zum Ausführen des Verfahrens gerichteten Ansprüche (vgl. FR 2 560 813 A1).

Beim Herstellen von Isolierglas wird die seitlich von den Rändern der wenigstens zwei Glasscheiben und nach innen von der Außenseite des Abstandhalters begrenzte Randfuge von Isolierglasrohlingen mit Versiegelungsmasse gefüllt. Die Versiegelungsmasse ergibt den endgültigen Randverbund von Isolierglas, sodass es wichtig ist, dass die Versiegelungsmasse in der richtigen Menge und fehlerlos eingebracht wird.

Zum Steuern des Versiegelns bzw. zum Regeln der Bewegungen der Versiegelungsdüse (oder mehrerer Versiegelungsdüsen) sowie zum Regeln der Zufuhr der Versiegelungsmasse zur Versiegelungsdüse sind verschiedene Verfahren bekannt, die alle zum Ziel haben, eine möglichst gleichmäßige Versiegelung mit zutreffend gefüllter Randfuge zu ergeben.

Dessen ungeachtet ist die exakte Regelung der Versiegelung schwierig, weil sie von vielen Parametern, wie Temperatur, Viskosität, Kompressibilität, Adhäsionsphänomenen usw. beeinflusst wird.

Die FR 2 560 813 A zeigt ein Verfahren und eine Vorrichtung zum Versiegeln von Isolierglasrohlingen mit Hilfe einer Versiegelungsdüse, wobei zur Änderung der Relativgeschwindigkeit zwischen Versiegelungsdüse und Isolierglasrohling und/oder zur Regelung der einzubringenden Versiegelungsmassenmenge mittels Sensoren die Größe einer in Bewegungsrichtung der Versiegelungsdüse vorlaufenden Materialzunge aus Versiegelungsmasse gemessen wird. So wird das Versiegeln bei der FR 2 560 813 A1 in Abhängigkeit von der Länge einer der Versiegelungsdüse vorlaufenden Zunge aus Versiegelungsmasse geregelt.

Der Erfindung liegt die Aufgabe zugrunde, ein Verfahren und eine Vorrichtung der eingangs genannten Gattung zur Verfügung zu stellen, mit welcher das Versiegeln von Isolierglasrohlingen einfach und sicher sowie zuverlässig gesteuert werden kann.

Gelöst wird diese Aufgabe erfindungsgemäß mit einem Verfahren, das die Merkmale von Anspruch 1 aufweist.

Die der Erfindung zugrunde liegende Aufgabe wird auch mit einer Vorrichtung gelöst, welche die Merkmale des unabhängigen, auf die Vorrichtung gerichteten Anspruches aufweist und mit welcher Vorrichtung das erfindungsgemäße Verfahren ohne Weiteres durchgeführt werden kann.

Die Erfindung beruht im Wesentlichen darauf, die Länge, der sich vor der Versiegelungsdüse aufbauenden Materialzunge (der Versiegelungsdüse vorlaufende Versiegelungsmasse) aus Versiegelungsmasse zu erfassen und darauf aufbauend das Versiegeln zu regeln, wenn eine Randfuge von Isolierglasrohlingen versiegelt wird.

Eine solche Materialzunge aus Versiegelungsmasse, die sich in Bewegungsrichtung vor der Versiegelungsdüse ausbildet, bildet sich insbesondere bei in die Randfuge nicht eintauchenden Versiegelungsdüsen aus, wobei diese Düsen für gewöhnlich eine ballige, nämlich konvexe, teilzylindermantelförmige, der Randfuge zugekehrte Fläche aufweisen, mit welcher sie an den Innenkanten der beiden Glasscheiben, welche die Randfuge seitlich begrenzen, gleiten.

Das Erfassen der Länge der Materialzunge vor der Versiegelungsdüse erlaubt es, unmittelbar auf eine Über- oder Unterdosierung der Versiegelungsmasse bezogen auf die Bewegungsgeschwindigkeit der Versiegelungsdüse relativ zum Isolierglasrohling zu schließen.

Durch Korrigieren der in der Zeiteinheit der Versiegelungsdüse zugeführten Menge an Versiegelungsmasse und/oder durch Ändern der Relativgeschwindigkeit zwischen Versiegelungsdüse und Isolierglasrohling (Vergrößern oder Verkleinern dieser Geschwindigkeit) kann erreicht werden, dass die jeweils richtige Menge an Versiegelungsmasse in die Randfuge eingebracht wird, sodass eine ordnungsgemäße Versiegelung der Randfuge von Isolierglasrohlingen erreicht wird.

Bei der Erfindung wird als Abmessung der Materialzunge die Länge der Materialzunge vor der Versiegelungsdüse erfasst.

Dies erfolgt durch Erfassen von Daten eines Gasstromes, z.B. Pressluft, der einem der Versiegelungsdüse bezogen auf ihre vorbestimmte Bewegungsrichtung vorgeordneten Sensor zugeführt wird.

Im Rahmen der Erfindung erfasste Daten des Gasstromes sind beispielsweise Durchflussmengen und Drücke im Gasstrom sowie Schwingungen im Gasstrom, die insbesondere nach dem Austritt des Gasstromes aus dem Sensor entstehen.

In der der Randfuge zugekehrten Fläche des Sensors, der beispielsweise mit der Halterung der Düse einstückig ausgebildet sein kann, sind zwei oder mehrere lochförmige Austrittsöffnungen, die in die Randfuge offen sind, und die in einer parallel zur zu füllenden Randfuge ausgerichteten, d.h. parallel zur vorgesehenen Bewegungsrichtung der Versiegelungsdüse, Reihe angeordnet sind, vorgesehen. An Stelle von lochförmigen Austrittsöffnungen kann eine schlitzförmige Austrittsöffnung, die zur Randfuge parallel ausgerichtet ist, vorgesehen sein.

Je nach der Länge der Materialzunge aus Versiegelungsmasse werden eine, zwei oder mehrere der lochförmigen Öffnungen bzw. ein größerer oder kleinerer Bereich der schlitzförmigen Öffnung abgedeckt, so dass sich eine Änderung der für den Austritt des dem Sensor zugeführten Gasstromes aus dem Sensor zur Verfügung stehenden Querschnittsfläche ergibt. So kann durch Durchflussmessung des Gasstromes, durch eine Differenzdruckmessung über eine Drossel oder durch eine Staudruckmessung auf die Abmessung, insbesondere die Länge der Materialzunge aus Versiegelungsmasse geschlossen werden.

Der erfindungsgemäß vorgesehene, pneumatisch arbeitende Sensor mit Druckgaszufuhr und mit der Größe der für den Gasaustritt zur Verfügung stehenden Querschnittsfläche, erfasst die Länge der Materialzunge aus der Düse vorlaufender Versiegelungsmasse genau und problemloser als der aus der FR 2 560 813 A1 bekannte Infrarot-Sensor mit Sender und Empfänger.

Weitere Einzelheiten und Merkmale der Erfindung ergeben sich aus der nachstehenden Beschreibung eines bevorzugten Ausführungsbeispiels eines Sensors mit Auftragdüse und zwei Anwendungsbeispielen. Es zeigt:
- Fig. 1: schematisiert dargestellt eine einer Randfuge eines Isolierglasrohlings zugeordnete Versiegelungsdüse mit Sensor,
- Fig. 2: eine Seitenansicht (geschnitten) zu Fig. 1,
- Fig. 3: die Düse mit Sensor von ihrer dem Isolierglasrohling zugekehrten Fläche aus gesehen,
- Fig. 4: eine Seitenansicht (teilweise geschnitten) dazu,
- Fig. 5: einen Schnitt längs der Linie A-A in Fig. 3 und
- Fig. 6: das Prinzip der Durchflussmessung über das Bestimmen des Differenzdruckes.

Ein Isolierglasrohling 1, dessen Randfuge 2 mit Versiegelungsmasse 3 zu füllen ist (Versiegeln des Isolierglasrohlings 1), besteht im gezeigten Ausführungsbeispiel aus zwei Glasscheiben 4, 5 und einem dazwischen gefügten Abstandhalter 6, der die Glasscheiben 4, 5 mit Abstand voneinander miteinander verbindet. In die nach außen offene Randfuge 2 wird beim Versiegeln Versiegelungsmasse 3 eingefüllt, das aus einer Versiegelungsdüse 7 in die Randfuge 2 eintritt, insbesondere eingespritzt wird.

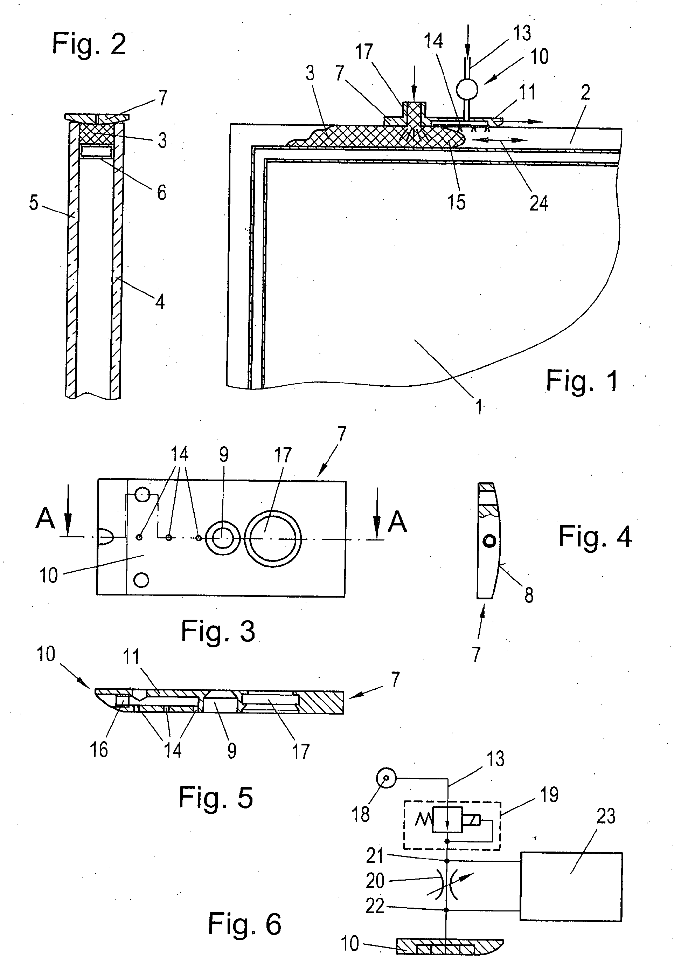

Im gezeigten Ausführungsbeispiel ist, wie insbesondere Fig. 2 zeigt, eine ballige Versiegelungsdüse 7 vorgesehen, d.h. eine Versiegelungsdüse 7, deren der Randfuge 2 zugekehrte Fläche 8 nach Art eines Teilzylindermantels konvex gewölbt ist. In der Versiegelungsdüse 7 ist eine Austrittsöffnung 17 für Versiegelungsmasse 3 vorgesehen, das der Versiegelungsdüse 7 über nicht gezeigte Leitungen aus Vorratsfässern über Pumpen und Ähnliches zugeführt wird.

Der Versiegelungsdüse 7 ist im gezeigten Ausführungsbeispiel ein Sensor 10 zugeordnet und mit dem Körper der Versiegelungsdüse 7 einstückig ausgebildet. Der Sensor 10 umfasst einen Körper 11, in dem ein Hohlraum 12 vorgesehen ist. In den Hohlraum 12 wird über eine Leitung 13 Gas, z.B. Pressluft, zugeführt. Der Hohlraum 12 im Sensor 10 ist im gezeigten Ausführungsbeispiel in Richtung auf die Randfuge 2 hin durch mehrere löchförmige Öffnungen 14 offen, so dass das in den Hohlraum 12 eingeführte Gas über die Öffnungen 14 wieder austreten kann.

An Stelle der lochförmigen Öffnungen 14 kann eine schlitzförmige Öffnung für den Austritt von Gas aus dem Hohlraum 12 im Sensor 10 vorgesehen sein. Sowohl die Reihe von Öffnungen 14 als auch der Schlitz sind parallel zur Randfuge 2 und parallel zur vorgegebenen Richtung (Pfeil 24 in Fig. 1) der Relativbewegung zwischen Versiegelungsdüse 7 und Isolierglasrohling 1 ausgerichtet.

Fig. 1 zeigt, dass sich beim Füllen der Randfuge 2 bezogen auf die Bewegung der Versiegelungsdüse 7 vor der Versiegelungsdüse 7 eine Materialzunge 15 aus der Versiegelungsdüse 7 vorlaufender Versiegelungsmasse 3 ausbildet. Die Größe der Materialzunge 15 ist proportional zum Füllgrad, also von der Menge an in die Randfuge 2 eingebrachter Versiegelungsmasse 3 abhängig.

Der Erfindung liegt nun die Erkenntnis zugrunde, dass die Größe, insbesondere Länge, dieser Materialzunge 15 dazu herangezogen werden kann, das Versiegeln so zu steuern, dass ungeachtet der übrigen Parameter (Relativgeschwindigkeit zwischen Versiegelungsdüse 7 und Isolierglasrohling 1, Tiefe und/oder Breite der Randfuge und sonstigen Parametern, wie Temperatur, Viskosität, Kompressibilität der Versiegelungsmasse, Adhäsionsphänomene von Versiegelungsmasse an den Glasscheiben bzw. dem Abstandhalter) in die Randfuge 2 die richtige Menge an Versiegelungsmasse 3 eingebracht wird.

Beim Erfassen der Länge der Materialzunge 15 arbeitet der wie vorstehend beschrieben ausgebildete, pneumatisch arbeitende Sensor 10 wie folgt:
Durch die Materialzunge 15 wird, je nach Länge derselben, eine oder mehrere der Öffnungen 14 des Hohlraumes 12 in dem Sensor abgedeckt, sodass die für den Austritt von dem Hohlraum 12 des Sensors 10 zugeführten Gasstrom aus dem Sensor 10 zur Verfügung stehende Querschnittsfläche verkleinert wird und sich die Strömungsverhältnisse im zugeführten Gasstrom ändern.

Über eine Durchflussmessung und/oder eine Differenzdruckmessung über eine Drossel und/oder über eine Staudruckmessung kann die Länge der Materialzunge 15, also deren in Bewegungsrichtung gesehen vor der Versiegelungsdüse 7 liegende Erstreckung erfasst, und daraus auf eine Über- oder Unterdosierung geschlossen werden. Aus dem Ergebnis des Erfassens der Länge der Materialzunge 15 kann für das Regeln des Versiegelungsprozesses ein Rückschluss getroffen werden, der sich auf direkt am Ende der Prozesskette (also in der zu füllenden Randfuge) gemessene Daten stützt.

Bei der in den Fig. 3 bis 5 gezeigten Ausführungsform einer Versiegelungsdüse 7 ist der Sensor 10 in die Versiegelungsdüse 7 unmittelbar integriert, indem der Hohlraum 12 durch eine Bohrung gebildet wird, deren Ende mit einem Stopfen 16 verschlossen wird, wobei drei zur balligen Seite 8 der Versiegelungsdüse 7 hin führende Austrittsöffnungen 14 vorgesehen sind. Die Versiegelungsdüse 7 selbst ist mit einer Öffnung 9 für ihre Befestigung an einem Düsenkopf ausgestattet und es ist eine Öffnung 17, durch die Versiegelungsmasse 3 zugeführt wird, vorgesehen.

In Fig. 6 ist als Beispiel für eine Funktion des der Versiegelungsdüse 7 zugeordneten ("pneumatischen") Sensors 10 das Messen der Durchflussmenge an Gas durch den Sensor 10 über einen Differenzdruck dargestellt. Dem Sensor 10 wird Gas, z.B. Pressluft, aus einer Gasquelle 18 über die Leitung 13 zugeführt. In der Leitung 13 ist ein elektrisch einstellbarer Druckregler 19 vorgesehen. Des weiteren ist in der Leitung eine Drossel 20, insbesondere eine einstellbare Drossel, vorgesehen. Vor und nach der Drossel 20 sind in der Leitung 13 Anschlüsse 21, 22 für eine Differenzdruckmesseinrichtung 23 angeschlossen, sodass der Staudruck über die Drossel 20 gemessen werden kann.

Unter den beim erfindungsgemäßen Verfahren erfassten Daten des Gasstromes sind auch Schwingungen zu verstehen, die beim Eintritt des Gasstromes (Ausströmen des Gasstromes aus dem Sensor 10) in die Randfuge 2 entstehen (Geräuschentwicklung).

Im Gasstrom, der in den vom Abstandhalter 6, den Glasscheiben 4 und 5 sowie vom Senor 11 begrenzten Raum, der auf einer Seite vom vorderen Ende der Materialzange 15 geschlossen wird und am Ende offen ist, eintritt, entstehen in dem genannten Raum Schwingungen im dort befindlichen Bereich des Gasstromes.

Diese Schwingungen hängen von der (durch die Größe der Materialzunge 15 bestimmten) Länge des Raumes ab (kurzer Raum kurzwellige Schwingungen, längerer Raum langwellige Schwingungen). Somit ist die Wellenlänge / Frequenz der Schwingungen des Gasstromes im Raum vor dem Ende der Materialzunge 15 ein Maß für die Größe der Materialzunge 15 aus Versiegelungsmasse. Die Schwingungen der Luftsäule (in der Regel ein pfeifender Ton, der aus einem Grundton und Obertönen zusammengesetzt ist) wird von einem Schallsensor (Mikrofon) erfasst. Wenn die vom Mikrofon erfasste Tonhöhe einer gewünschten Größe (Länge) der Materialzunge 15 entspricht, wird das Versiegeln korrekt ausgeführt. Ist die Tonhöhe zu nieder oder zu hoch sind Parameter der Versiegelung (wie weiter oben erwähnt) so zu ändern, dass die Größe (Länge) der Materialzunge 15 der richtigen, in die Randfuge 2 eingebrachten Menge an Versiegelungsmasse entspricht.

Zusammenfassend kann ein Ausführungsbeispiel der Erfindung wie folgt beschrieben werden.

Beim Versiegeln von Isolierglasrohlingen wird Versiegelungsmasse aus einer Versiegelungsdüse in die nach außen offene Randfuge des Isolierglasrohlinges eingebracht. Dabei bildet sich vor der Versiegelungsdüse eine Materialzunge aus der Versiegelungsdüse vorlaufender Versiegelungsmasse aus. Die Größe der Materialzunge ist proportional zur Menge der in der Zeiteinheit in die Randfuge eingebrachten Versiegelungsmasse. Das Versiegeln wird in Abhängigkeit von der durch einen Sensor erfassten Länge der Materialzunge gesteuert. Dabei wird insbesondere die in der Zeiteinheit der Versiegelungsdüse zugeführte Menge an Versiegelungsmasse und/oder die Relativgeschwindigkeit zwischen Isolierglasrohling und Versiegelungsdüse in Abhängigkeit von der vom Sensor erfassten Länge der Materialzunge geregelt.

## Patentansprüche

1. Verfahren zum Versiegeln von Isolierglasrohlingen (1) mit Hilfe wenigstens einer Versiegelungsdüse (7), aus der Versiegelungsmasse in eine nach außen offene Randfuge (2) des Isolierglasrohlings (1) eingebracht wird, wobei zwischen der Versiegelungsdüse (7) und dem Isolierglasrohling (1) eine Relativbewegung ausgeführt wird, wobei die Länge einer sich vor der Versiegelungsdüse (7) durch der Versiegelungsdüse (7) vorlaufende Versiegelungsmasse ausbildenden Materialzunge (15) aus Versiegelungsmasse gemessen wird, und auf Grund der erfassten Länge der Materialzunge (15) die Zufuhr von Versiegelungsmasse zur Versiegelungsdüse (7) und/oder die Relativgeschwindigkeit zwischen Versiegelungsdüse (7) und Isolierglasrohling (1) geregelt wird, **dadurch gekennzeichnet, dass** zum Messen der Länge der Materialzunge (15) einem Sensor (10), der bezogen auf die vorbestimmte Bewegungsrichtung (Pfeil 24) der Versiegelungsdüse (7) vor der Versiegelungsdüse (7) angeordnet ist, ein Gasstrom zugeführt wird und dass die Daten des Gasstromes, der sich wegen der Änderung der für den Austritt des dem Sensor (10) zugeführten Gasstromes aus dem Sensor (10) zur Verfügung stehenden Querschnittsfläche, die von der Länge der Materialzunge (15) aus der Versiegelungsdüse vorlaufenden Versiegelungsmasse abhängt, ändert, erfasst werden.

2. Verfahren nach Anspruch 1, **dadurch gekennzeichnet, dass** dem Sensor (10) als Gas Druckluft zugeführt wird.

3. Verfahren nach Anspruch 1 oder 2, **dadurch gekennzeichnet, dass** die Daten des Gasstromes durch Durchflussmessung des Gasstromes, durch eine Differenzdruckmessung (23) über eine Drossel oder durch eine Staudruckmessung erfasst werden.

4. Verfahren nach Anspruch 1 oder 2, **dadurch gekennzeichnet, dass** beim Eintritt des Gasstromes aus dem Sensor (10) in den Raum, der vom Abstandhalter (6), den Glasscheiben (4 und 5) und vom Sensor (10) sowie an einem Ende von der Materialzunge (15) begrenzt ist, entstehende Schwingungen im Gasstrom erfasst und mit einem vorgegebenen Wert verglichen werden.

5. Verfahren nach Anspruch 4, **dadurch gekennzeichnet, dass** die Schwingungen mit Hilfe eines Schallsensors, insbesondere mit einem Mikrofon, erfasst werden.

6. Vorrichtung zum Ausführen des Verfahrens nach einem der Ansprüche 1 bis 5, mit wenigstens einer Versiegelungsdüse (7) und mit Einrichtungen zum Ausführen einer Relativbewegung zwischen der Versiegelungsdüse (7) und dem Isolierglasrohling (1) mit einem der Versiegelungsdüse (7) zugeordneten Sensor (10) zum Erfassen der Größe der Materialzunge (15), welcher Sensor (10) bezogen auf die Bewegungsrichtung (Pfeil 24) der Versiegelungsdüse (7) relativ zum Isolierglasrohling (1) vor der Versiegelungsdüse (7) vorgesehen ist, **dadurch gekennzeichnet, dass** der Sensor (10) einen Hohlraum (12) aufweist, in den eine Leitung (13) zum Zuführen von unter Druck stehendem Gas, insbesondere Pressluft, mündet und dass in der der Randfuge (2) zugekehrten Fläche (8) des Sensors (10) wenigstens zwei zur Randfuge (2) hin offene, lochförmige Öffnungen (14) oder eine in Längsrichtung der Randfuge (2) verlaufende, schlitzförmige Öffnung vorgesehen ist.

7. Vorrichtung nach Anspruch 6, **dadurch gekennzeichnet, dass** der Sensor (10) mit der Versiegelungsdüse (7) verbunden, insbesondere mit ihr einstückig ausgebildet ist.

8. Vorrichtung nach Anspruch 6 oder 7, **dadurch gekennzeichnet, dass** der Zufuhrleitung (13) für Gas zum Sensor (10) ein Durchflussmengenmessgerät zugeordnet ist.

9. Vorrichtung nach Anspruch 6 oder 7, **dadurch gekennzeichnet, dass** der Leitung (13) zum Zuführen von Gas zum Sensor (10) eine Einrichtung zur Differenzdruckmessung (23) und eine in der Leitung (13) vorgesehenen Drossel (20) zugeordnet ist.

10. Vorrichtung nach Anspruch 6 oder 7, **dadurch gekennzeichnet, dass** der Leitung (13) zum Zuführen von Gas zum Sensor (10) eine Einrichtung zur Staudruckmessung zugeordnet ist.

## Claims

1. Method for sealing insulation glass blanks (1) with the aid of at least one sealing nozzle (7), from which sealant is introduced into an outwardly open edge joint (2) of the insulation glass blank (1), wherein a relative movement is executed between the sealing nozzle (7) and the insulation glass blank (1), wherein the length of a material tongue (15) of sealant forming ahead of the sealing nozzle (7) from the sealant moving forward through the sealing nozzle (7) is measured, and on the basis of the recorded length of the material tongue (15) the supply of sealant to the sealing nozzle (7) and/or the relative velocity between sealing nozzle (7) and insulation glass blank (1) is controlled, **characterised in that** for purposes of measuring the length of the material tongue (15) a gas flow is supplied to a sensor (10), which, with respect to the predetermined direction of movement (arrow 24) of the sealing nozzle (7), is arranged ahead of the sealing nozzle (7), and **in that** the data of the gas flow are recorded, which gas flow alters on account of the alteration of the cross-sectional area that is available for the exit of the gas flow supplied to the sensor (10) out of the sensor (10), which cross-sectional area is a function of the length of the material tongue (15) of the sealant moving forward out of the sealing nozzle.

2. Method according to claim 1, **characterised in that** compressed air is supplied to the sensor (10) as a gas.

3. Method according to claim 1 or 2, **characterised in that** the data of the gas flow are recorded by measurement of the flow rate of the gas flow by a differential pressure measurement (23) across a restrictor, or by a stagnation pressure measurement.

4. Method according to claim 1 or 2, **characterised in that** with the entry of the gas flow from the sensor (10) into the space that is bounded by the spacer (6), the glass plates (4 and 5) and by the sensor (10), and also at one end by the material tongue (15), vibrations arising in the gas flow are recorded and compared with a prescribed value.

5. Method according to claim 4, **characterised in that** the vibrations are recorded with the aid of a sound sensor, in particular with a microphone.

6. Device for the execution of the method according to one of the claims 1 to 5, with at least one sealing nozzle (7), and with devices for purposes of executing a relative movement between the sealing nozzle (7) and the insulation glass blank (1), with a sensor (10) assigned to the sealing nozzle (7) for purposes of recording the size of the material tongue (15), which sensor (10), with respect to the direction of movement (arrow 24) of the sealing nozzle (7) relative to the insulation glass blank (1), is provided ahead of the sealing nozzle (7), **characterised in that** the sensor (10) has a cavity (12), into which leads a line (13) for purposes of supplying gas under pressure, in particular compressed air, and **in that** in the surface (8) of the sensor (10) facing towards the edge joint (2) at least two hole-shaped openings (14) open towards the edge joint (2) are provided, or one slot-shaped opening running in the longitudinal direction of the edge joint (2).

7. Device according to claim 6, **characterised in that** the sensor (10) is connected with the sealing nozzle (7), in particular is integrally formed with the latter.

8. Device according to claim 6 or 7, **characterised in that** a flow rate measurement unit is assigned to the supply line (13) for gas to the sensor (10).

9. Device according to claim 6 or 7, **characterised in that** a device for purposes of differential pressure measurement (23) and a restrictor (20) provided in the line (13) are assigned to the line (13) for purposes of supplying gas to the sensor (10).

10. Device according to claim 6 or 7, **characterised in that** a device for purposes of stagnation pressure measurement is assigned to the line (13) for purposes of supplying gas to the sensor (10).

## Revendications

1. Procédé de scellement de flans de verre isolant (1) à l'aide d'au moins une buse de scellement (7), de laquelle de la masse de scellement est injectée dans une jointure de bord (2) du flan de verre isolant (1) ouverte vers l'extérieur, sachant qu'un mouvement relatif est effectué entre la buse de scellement (7) et le flan de verre isolant (1), sachant que la longueur d'une languette de matière (15) de masse de scellement formant avant la buse de scellement (7) de la masse de scellement sortant en tête de la buse de scellement (7) est mesurée, et en fonction de la longueur détectée de la languette de matière (15), l'alimentation de masse de scellement vers la buse de scellement (7) et/ou la vitesse relative entre la buse de scellement (7) et le flan de verre isolant (1) est réglée, **caractérisé en ce que** pour mesurer la longueur de la languette de matière (15), un flux de gaz est fourni à un capteur (10) qui est disposé avant la buse de scellement (7) par rapport au sens de déplacement prédéfini (flèche 24) de la buse de scellement (7), et que les données du flux de gaz qui se modifie du fait de la modification de la surface transversale présente pour la sortie hors du capteur (10) du flux de gaz amené au capteur (10), qui dépend de la longueur de la languette de matière (15) de la masse de scellement sortant en tête de la buse de scellement, sont détectées.

2. Procédé selon la revendication 1, **caractérisé en ce que** de l'air comprimé est amené au capteur (10) en tant que gaz.

3. Procédé selon la revendication 1 ou 2, **caractérisé en ce que** les données du flux de gaz sont détectées par une mesure de débit du gaz, par une mesure de la pression différentielle (23) par le biais d'un étranglement ou par une mesure de la pression dynamique.

4. Procédé selon la revendication 1 ou 2, caractérisé en ce lors de l'entrée du flux de gaz du capteur (10) dans l'espace qui est délimité par l'écarteur (6), les vitres (4 et 5) et le capteur (10) ainsi que par la languette de matière (15) à une extrémité, des oscillations dans le flux de gaz sont détectées et comparées à une valeur prédéfinie.

5. Procédé selon la revendication 4, **caractérisé en ce que** les oscillations sont détectées à l'aide d'un capteur acoustique, en particulier d'un microphone.

6. Dispositif pour exécuter le procédé selon l'une des revendications 1 à 5, comprenant au moins une buse de scellement (7) et des équipements pour exécuter un mouvement relatif entre la buse de scellement (7) et le flan de verre isolant (1) avec un capteur (10) attribué à la buse de scellement (7) pour détecter la dimension de la languette de matière (15), lequel capteur (10) est prévu avant la buse de scellement (7) par rapport au sens de déplacement (flèche 24) de la buse de scellement (7) par rapport au flan de verre isolant (1), **caractérisé en ce que** le capteur (10) présente une cavité (12) dans laquelle une ligne (13) d'alimentation de gaz sous pression, en particulier d'air comprimé, débouche, et **en ce que** dans la face (8) du capteur (10) tournée vers la jointure de bord (2), au moins deux ouvertures (14) formant un trou, ouvertes en direction de la jointure de bord (2) ou une ouverture fendue dans le sens longitudinal de la jointure de bord (2), sont prévues.

7. Dispositif selon la revendication 6, **caractérisé en ce que** le capteur (10) est relié à la buse de scellement (7), est en particulier formé d'un seul tenant avec celle-ci.

8. Dispositif selon la revendication 6 ou 7, **caractérisé en ce que** la ligne d'alimentation (13) de gaz vers le capteur (10) a un débitmètre.

9. Dispositif selon la revendication 6 ou 7, **caractérisé en ce que** la ligne d'alimentation (13) de gaz vers le capteur (10) a un dispositif de mesure de la pression différentielle (23) et un étranglement (20) prévu dans la ligne (13).

10. Dispositif selon la revendication 6 ou 7, **caractérisé en ce que** la ligne d'alimentation (13) de gaz vers le capteur (10) a un dispositif pour mesurer la pression dynamique.
